(19) Europäisches Patentamt
European Patent Office
Office européen des brevets

(11) **EP 4 350 580 A1**

(12) **EUROPEAN PATENT APPLICATION**

(43) Date of publication:
**10.04.2024  Bulletin 2024/15**

(21) Application number: **22200122.4**

(22) Date of filing: **06.10.2022**

(51) International Patent Classification (IPC):
**G06N 3/0464** (2023.01)   **G06N 3/044** (2023.01)
**G06N 3/0442** (2023.01)   **G06N 3/088** (2023.01)
**G06N 3/09** (2023.01)   **G06N 3/0495** (2023.01)

(52) Cooperative Patent Classification (CPC):
**G06N 3/0464; G06N 3/0442; G06N 3/0495;
G06N 3/088; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Technologies Oy
02610 Espoo (FI)**

(72) Inventors:
• **SPATHIS, Dimitrios
  Cambridge, CB1 2PZ (GB)**
• **MATHUR, Akhil
  London, N17 9GE (GB)**

(74) Representative: **Page White Farrer
Bedford House
21a John Street
London WC1N 2BF (GB)**

(54)  **APPARATUS, METHOD, AND COMPUTER PROGRAM FOR TRANSFER LEARNING**

(57)    There is provided an apparatus, method and computer program for a network node comprising access to a pre-trained neural network node model, for causing the network node to: receive, from an apparatus, a request for a first plurality of embeddings associated with an intermediate layer of the neural network node model; and signal said first plurality of embeddings to the apparatus.

```
┌─────────────┐
│     201     │
└─────────────┘
       │
       ▼
┌─────────────┐
│     202     │
└─────────────┘
```

**Fig. 2**

**EP 4 350 580 A1**

**Description**

*Field of the disclosure*

The examples described herein generally relate to apparatus, methods, and computer programs, and more particularly (but not exclusively) to apparatus, methods and computer programs for apparatuses performing machine learning.

*Background*

A communication system can be seen as a facility that enables communication sessions between two or more entities such as communication devices, servers, base stations and/or other nodes by providing carriers between the various entities involved in a communications path.

The communication system may be a wired and/or wireless communication system. Examples of wireless systems comprise public land mobile networks (PLMN) operating based on radio standards such as those provided by 3GPP (3rd Generation Partnership Project), satellite based communication systems and different wireless local networks, for example wireless local area networks (WLAN). The wireless systems can be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

*Summary*

According to a first aspect, there is provided a method for an apparatus, the method comprising: obtaining, from a pre-trained neural network node model a first plurality of embeddings associated with an intermediate layer of the neural network node model; obtaining a value of first number of resources available on a device for fine-tuning and/or retraining at least part of the pre-trained neural network node model; using the value of the first number of resources to determine a number of averaging functions to be performed, by the device, over a time dimension for each channel of the pre-trained neural network node model; transforming the first plurality of embeddings into a second plurality of embeddings by performing said number of averaging functions for the each channel; and causing the device to train a device specific neural network model using the second plurality of embeddings.

The intermediate layer may be a layer of the pre-trained neural network node model that is performed prior to an aggregation of the time series data over a time dimension.

Said averaging functions may comprise one or more of power means functions.

The one or more power means functions may be a fractional subset of a plurality of power means functions, each of the plurality of power means functions being associated with respective priority for selection, and wherein the transforming may comprise: selecting said one or more power means functions from the plurality of power means functions in order descending from highest priority to lowest priority; and generating, for each of said one or more power means functions and each of said first plurality of embeddings, said second plurality of embeddings.

The using the value of the first number of resources to determine said number of averaging functions to be performed, by the device, over the time dimension for each channel may comprise: determining a value of second number of resources required for obtaining single scalar statistical information on the first plurality of input data; subtracting the value of the second number of resources from the value of the first number of resources to output a third value; and dividing the third value by the number of channels values to obtain a divided third value; and obtaining the number of averaging functions by subsequently performing a rounding function on the divided third value.

Said causing the device to train at least part of the device-specific neural network node model using the second plurality of embeddings may comprise: concatenating said second plurality of embeddings along the channel dimension to produce a third plurality of embeddings, wherein the number of embeddings in the third plurality is less than the number of embeddings in the second plurality.

Said obtaining the first plurality of embeddings may comprise: signalling, to a network node, a request for said first plurality of embeddings, wherein said request comprises unlabelled input data; and receiving said first plurality of embeddings from the network node.

The method may comprise: causing the device to run the trained device-specific neural network model using a second plurality of input data in order to output at least one inference; and using said inference to identify at least a type of data.

The device-specific neural network model may relate to recognizing audio data, the second plurality of input data may comprise an audio sample, and wherein the identifying at least one type of data may comprise identifying different types of audio signals within the audio sample.

The device-specific neural network model may relate to recognizing activity data, the second plurality of input data may comprise activity data produced when a user performs at least one type of activity, and wherein the identifying at least one type of data may comprise identifying at least one activity from said activity data.

The intermediate layer may comprise a last high dimensional layer prior to a penultimate layer of the neural network node model.

The pre-trained neural network node model may be pre-trained on time-series data, wherein the time series data comprises a first plurality of input data, each of said first plurality of input data comprising a tensor having associated sets of sample values, timestep values, and channel values.

According to a second aspect, there is provided a method for a network node comprising access to a pre-trained neural network node model, the method comprising: receiving, from an apparatus, a request for a first plurality of embeddings associated with an intermediate layer of the neural network node model; and signalling said first plurality of embeddings to the apparatus.

The request may comprise unlabelled input data.

The intermediate layer may comprise a last high dimensional layer prior to a penultimate layer of the neural network node model.

The pre-trained neural network node model may be pre-trained on time-series data, wherein the time series data comprises a first plurality of input data, each of said first plurality of input data comprising a tensor having associated sets of sample values, timestep values, and channel values.

According to a third aspect, there is provided an apparatus, the apparatus comprising means for: obtaining, from a pre-trained neural network node model a first plurality of embeddings associated with an intermediate layer of the neural network node model; obtaining a value of first number of resources available on a device for fine-tuning and/or retraining at least part of the pre-trained neural network node model; using the value of the first number of resources to determine a number of averaging functions to be performed, by the device, over a time dimension for each channel of the pre-trained neural network node model; transforming the first plurality of embeddings into a second plurality of embeddings by performing said number of averaging functions for the each channel; and causing the device to train a device specific neural network model using the second plurality of embeddings.

The intermediate layer may be a layer of the pre-trained neural network node model that is performed prior to an aggregation of the time series data over a time dimension.

Said averaging functions may comprise one or more of power means functions.

The one or more power means functions may be a fractional subset of a plurality of power means functions, each of the plurality of power means functions being associated with respective priority for selection, and wherein the transforming may comprise: selecting said one or more power means functions from the plurality of power means functions in order descending from highest priority to lowest priority; and generating, for each of said one or more power means functions and each of said first plurality of embeddings, said second plurality of embeddings.

The means for using the value of the first number of resources to determine said number of averaging functions to be performed, by the device, over the time dimension for each channel may comprise means for: determining a value of second number of resources required for obtaining single scalar statistical information on the first plurality of input data; subtracting the value of the second number of resources from the value of the first number of resources to output a third value; and dividing the third value by the number of channels values to obtain a divided third value; and obtaining the number of averaging functions by subsequently performing a rounding function on the divided third value.

Said means for causing the device to train at least part of the device-specific neural network model using the second plurality of embeddings may comprise: means for concatenating said second plurality of embeddings along the channel dimension to produce a third plurality of embeddings, wherein the number of embeddings in the third plurality is less than the number of embeddings in the second plurality.

Said means for obtaining the first plurality of embeddings may comprise means for: signalling, to a network node, a request for said first plurality of embeddings, wherein said request comprises unlabelled input data; and receiving said first plurality of embeddings from the network node.

The apparatus may comprise means for: causing the device to run the trained device-specific model using a second plurality of input data in order to output at least one inference; and using said inference identify to at least a type of data.

The device-specific neural network model may relate to recognizing audio data, the second plurality of input data may comprise an audio sample, and wherein the means for identifying at least one type of data may comprise means for identifying different types of audio signals within the audio sample.

The device-specific neural network model may relate to recognizing activity data, the second plurality of input data may comprise activity data produced when a user performs at least one type of activity, and wherein the means for identifying at least one type of data may comprise means for identifying at least one activity from said activity data.

EP 4 350 580 A1

The intermediate layer may comprise a last high dimensional layer prior to a penultimate layer of the neural network node model.

The pre-trained neural network node model may be pre-trained on time-series data, wherein the time series data comprises a first plurality of input data, each of said first plurality of input data comprising a tensor having associated sets of sample values, timestep values, and channel values.

According to a fourth aspect, there is provided an apparatus for a network node comprising access to a pre-trained neural network node model, the network node apparatus comprising means for: receiving, from an apparatus, a request for a first plurality of embeddings associated with an intermediate layer of the neural network node model; and signalling said first plurality of embeddings to the apparatus.

The request may comprise unlabelled input data.

The intermediate layer may comprise a last high dimensional layer prior to a penultimate layer of the neural network node model.

The pre-trained neural network node model may be pre-trained on time-series data, wherein the time series data comprises a first plurality of input data, each of said first plurality of input data comprising a tensor having associated sets of sample values, timestep values, and channel values.

According to a fifth aspect, there is provided an apparatus, the apparatus comprising: at least one processor; and at least one memory comprising code that, when executed by the at least one processor, causes the apparatus to: obtain, from a pre-trained neural network node model a first plurality of embeddings associated with an intermediate layer of the neural network node model; obtain a value of first number of resources available on a device for fine-tuning and/or retraining at least part of the pre-trained neural network node model; use the value of the first number of resources to determine a number of averaging functions to be performed, by the device, over a time dimension for each channel of the pre-trained neural network node model; transform the first plurality of embeddings into a second plurality of embeddings by performing said number of averaging functions for the each channel; and cause the device to train a device specific neural network model using the second plurality of embeddings.

The intermediate layer may be a layer of the pre-trained neural network node model that is performed prior to an aggregation of the time series data over a time dimension.

Said averaging functions may comprise one or more of power means functions.

The one or more power means functions may be a fractional subset of a plurality of power means functions, each of the plurality of power means functions being associated with respective priority for selection, and wherein the transforming may comprise: selecting said one or more power means functions from the plurality of power means functions in order descending from highest priority to lowest priority; and generating, for each of said one or more power means functions and each of said first plurality of embeddings, said second plurality of embeddings.

The using the value of the first number of resources to determine said number of averaging functions to be performed, by the device, over the time dimension for each channel may comprise: determining a value of second number of resources required for obtaining single scalar statistical information on the first plurality of input data; subtracting the value of the second number of resources from the value of the first number of resources to output a third value; and dividing the third value by the number of channels values to obtain a divided third value; and obtaining the number of averaging functions by subsequently performing a rounding function on the divided third value.

Said causing the device to train at least part of the device-specific neural network model using the second plurality of embeddings may comprise: concatenating said second plurality of embeddings along the channel dimension to produce a third plurality of embeddings, wherein the number of embeddings in the third plurality is less than the number of embeddings in the second plurality.

Said obtaining the first plurality of embeddings may comprise: signalling, to a network node, a request for said first plurality of embeddings, wherein said request comprises unlabelled input data; and receiving said first plurality of embeddings from the network node.

The apparatus may be caused to: cause the device to run the trained device-specific model using a second plurality of input data in order to output at least one inference; and use said inference to identify at least a type of data.

The device-specific neural network model may relate to recognizing audio data, the second plurality of input data may comprise an audio sample, and wherein the identifying at least one type of data may comprise identifying different types of audio signals within the audio sample.

The device-specific neural network model may relate to recognizing activity data, the second plurality of input data may comprise activity data produced when a user performs at least one type of activity, and wherein the identifying at least one type of data may comprise identifying at least one activity from said activity data.

The intermediate layer may comprise a last high dimensional layer prior to a penultimate layer of the neural network node model.

The pre-trained neural network node model may be pre-trained on time-series data, wherein the time series data comprises a first plurality of input data, each of said first plurality of input data comprising a tensor having associated sets of sample values, timestep values, and channel values.

4

According to a sixth aspect, there is provided an apparatus for a network node comprising access to a pre-trained neural network node model, the network node apparatus comprising: at least one processor; and at least one memory comprising code that, when executed by the at least one processor, causes the network apparatus to: receive, from an apparatus, a request for a first plurality of embeddings associated with an intermediate layer of the neural network node model; and signal said first plurality of embeddings to the apparatus.

The request may comprise unlabelled input data.

The intermediate layer may comprise a last high dimensional layer prior to a penultimate layer of the neural network node model.

The pre-trained neural network node model may be pre-trained on time-series data, wherein the time series data comprises a first plurality of input data, each of said first plurality of input data comprising a tensor having associated sets of sample values, timestep values, and channel values.

According to a seventh aspect, there is provided an apparatus, the apparatus comprising: obtaining circuitry for obtaining, from a pre-trained neural network node model a first plurality of embeddings associated with an intermediate layer of the neural network node model; obtaining circuitry for obtaining a value of first number of resources available on a device for fine-tuning and/or retraining at least part of the pre-trained neural network node model; using circuitry for using the value of the first number of resources to determine a number of averaging functions to be performed, by the device, over a time dimension for each channel of the pre-trained neural network node model; transforming circuitry for transforming the first plurality of embeddings into a second plurality of embeddings by performing said number of averaging functions for the each channel; and causing circuitry for causing the device to train a device specific neural network model using the second plurality of embeddings.

The intermediate layer may be a layer of the pre-trained neural network node model that is performed prior to an aggregation of the time series data over a time dimension.

Said averaging functions may comprise one or more of power means functions.

The one or more power means functions may be a fractional subset of a plurality of power means functions, each of the plurality of power means functions being associated with respective priority for selection, and wherein the transforming circuitry for transforming may comprise: selecting circuitry for selecting said one or more power means functions from the plurality of power means functions in order descending from highest priority to lowest priority; and generating circuitry for generating, for each of said one or more power means functions and each of said first plurality of embeddings, said second plurality of embeddings.

The using circuitry for using the value of the first number of resources to determine said number of averaging functions to be performed, by the device, over the time dimension for each channel may comprise: determining circuitry for determining a value of second number of resources required for obtaining single scalar statistical information on the first plurality of input data; subtracting circuitry for subtracting the value of the second number of resources from the value of the first number of resources to output a third value; and dividing circuitry for dividing the third value by the number of channels values to obtain a divided third value; and obtaining circuitry for obtaining the number of averaging functions by subsequently performing a rounding function on the divided third value.

Said causing circuitry for causing the device to train at least part of the device-specific neural network model using the second plurality of embeddings may comprise: concatenating circuitry for concatenating said second plurality of embeddings along the channel dimension to produce a third plurality of embeddings, wherein the number of embeddings in the third plurality is less than the number of embeddings in the second plurality.

Said obtaining circuitry for obtaining the first plurality of embeddings may comprise: signalling circuitry for signalling, to a network node, a request for said first plurality of embeddings, wherein said request comprises unlabelled input data; and receiving circuitry for receiving said first plurality of embeddings from the network node.

The apparatus may comprise: causing circuitry for causing the device to run the trained device-specific neural network model using a second plurality of input data in order to output at least one inference; and using circuitry for using said inference to identify at a least type of data.

The device-specific neural network model may relate to recognizing audio data, the second plurality of input data may comprise an audio sample, and wherein the identifying circuitry for identifying at least one type of data may comprise identifying circuitry for identifying different types of audio signals within the audio sample.

The device-specific neural network model may relate to recognizing activity data, the second plurality of input data may comprise activity data produced when a user performs at least one type of activity, and wherein the identifying circuitry for identifying at least one type of data may comprise identifying circuitry for identifying at least one activity from said activity data.

The intermediate layer may comprise a last high dimensional layer prior to a penultimate layer of the neural network node model.

The pre-trained neural network node model may be pre-trained on time-series data, wherein the time series data comprises a first plurality of input data, each of said first plurality of input data comprising a tensor having associated sets of sample values, timestep values, and channel values.

According to an eighth aspect, there is provided an apparatus for a network node comprising access to a pre-trained neural network node model, the network node apparatus comprising: receiving circuitry for receiving, from an apparatus, a request for a first plurality of embeddings associated with an intermediate layer of the neural network node model; and signalling circuitry for signalling said first plurality of embeddings to the apparatus.

The request may comprise unlabelled input data.

The intermediate layer may comprise a last high dimensional layer prior to a penultimate layer of the neural network node model.

The pre-trained neural network node model may be pre-trained on time-series data, wherein the time series data comprises a first plurality of input data, each of said first plurality of input data comprising a tensor having associated sets of sample values, timestep values, and channel values.

According to a ninth aspect, there is provided non-transitory computer readable medium comprising program instructions for causing an apparatus to: obtain, from a pre-trained neural network node model a first plurality of embeddings associated with an intermediate layer of the neural network node model; obtain a value of first number of resources available on a device for fine-tuning and/or retraining at least part of the pre-trained neural network node model; use the value of the first number of resources to determine a number of averaging functions to be performed, by the device, over a time dimension for each channel of the pre-trained neural network node model; transform the first plurality of embeddings into a second plurality of embeddings by performing said number of averaging functions for the each channel; and cause the device to train a device specific neural network model using the second plurality of embeddings.

The intermediate layer may be a layer of the pre-trained neural network node model that is performed prior to an aggregation of the time series data over a time dimension.

Said averaging functions may comprise one or more of power means functions.

The one or more power means functions may be a fractional subset of a plurality of power means functions, each of the plurality of power means functions being associated with respective priority for selection, and wherein the transforming may comprise: selecting said one or more power means functions from the plurality of power means functions in order descending from highest priority to lowest priority; and generating, for each of said one or more power means functions and each of said first plurality of embeddings, said second plurality of embeddings.

The using the value of the first number of resources to determine said number of averaging functions to be performed, by the device, over the time dimension for each channel may comprise: determining a value of second number of resources required for obtaining single scalar statistical information on the first plurality of input data; subtracting the value of the second number of resources from the value of the first number of resources to output a third value; and dividing the third value by the number of channels values to obtain a divided third value; and obtaining the number of averaging functions by subsequently performing a rounding function on the divided third value.

Said causing the device to train at least part of the device-specific neural network model using the second plurality of embeddings may comprise: concatenating said second plurality of embeddings along the channel dimension to produce a third plurality of embeddings, wherein the number of embeddings in the third plurality is less than the number of embeddings in the second plurality.

Said obtaining the first plurality of embeddings may comprise: signalling, to a network node, a request for said first plurality of embeddings, wherein said request comprises unlabelled input data; and receiving said first plurality of embeddings from the network node.

The apparatus may be caused to: cause the device to run the trained device-specific neural network model using a second plurality of input data in order to output at least one inference; and use said inference to identify at least a type of data.

The device-specific neural network model may relate to recognizing audio data, the second plurality of input data may comprise an audio sample, and wherein the identifying at least one type of data may comprise identifying different types of audio signals within the audio sample.

The device-specific neural network model may relate to recognizing activity data, the second plurality of input data may comprise activity data produced when a user performs at least one type of activity, and wherein the identifying at least one type of data may comprise identifying at least one activity from said activity data.

**The** intermediate layer may comprise a last high dimensional layer prior to a penultimate layer of the neural network node model.

**The** pre-trained neural network node model may be pre-trained on time-series data, wherein the time series data comprises a first plurality of input data, each of said first plurality of input data comprising a tensor having associated sets of sample values, timestep values, and channel values.

According to a tenth aspect, there is provided non-transitory computer readable medium comprising program instructions for causing an apparatus for a network node comprising access to a pre-trained neural network node model: receive, from an apparatus, a request for a first plurality of embeddings associated with an intermediate layer of the neural network node model; and signal said first plurality of embeddings to the apparatus.

**The** request may comprise unlabelled input data.

**The** intermediate layer may comprise a last high dimensional layer prior to a penultimate layer of the neural network node model.

**The** pre-trained neural network node model may be pre-trained on time-series data, wherein the time series data comprises a first plurality of input data, each of said first plurality of input data comprising a tensor having associated sets of sample values, timestep values, and channel values.

According to an eleventh aspect, there is provided a computer program product stored on a medium that may cause an apparatus to perform any method as described herein.

According to a twelfth aspect, there is provided an electronic device that may comprise apparatus as described herein.

According to a thirteenth aspect, there is provided a chipset that may comprise an apparatus as described herein.

*Brief description of Figures*

Some examples, will now be described, merely by way of illustration only, with reference to the accompanying drawings in which:

Figures 1 and 2 illustrate example operations that may be performed by apparatus described herein;
Figure 3 shows a schematic representation of a user equipment;
Figure 4 shows a schematic representation of a non-volatile memory medium storing instructions which when executed by a processor allow a processor to perform one or more of the steps of the methods of some examples;
Figure 5 shows a schematic representation of a network;
Figure 6 illustrates example signal architecture; and
Figure 7 illustrates example signalling that may be performed by components described herein.

*Detailed description*

In the following description of examples, certain aspects are explained with reference to devices that may fine-tune and/or train at least part of a pre-trained model. Such devices are often capable of communication via wired and/or a wireless communication means, such as a cellular system and mobile communication systems serving such mobile devices. For brevity and clarity, the following describes such aspects with reference to a 5G wireless communication system. However, it is understood that such aspects are not limited to 5G wireless communication systems, and may, for example, be applied to other wireless communication systems (for example, current 6G proposals, IEEE 802.11, etc.).

Neural networks may be considered to be formed of an input layer, an output layer, and at least one hidden layer between the input and output layer (often a plurality of hidden layers). Each layer comprises a respective plurality of "nodes", or "neurons", which calculate the weighted sum of inputs and weights, applies a mathematical function (e.g., depending on the overall purpose of the neural network model, a linear function, a non-linear function, a tanh function, etc.), and outputs at least one input to nodes in an adjacent layer.

Neural network models may be trained using labelled datasets that have been annotated by humans under a process known as supervised learning. Given a specific training task and enough labels, supervised learning can achieve good performance. This performance usually requires a large number of manual labels, which are commonly inserted during one of the later layers of a neural network. In the best-case scenario, these may be provided through crowdsourcing (e.g., labelling images online).

However, these crowdsourcing labels are virtually impossible to be produced in some cases. For example, annotating wearable sensor time-series for human activity recognition tasks a posteriori is not feasible without a video recording.

Therefore, only a few organizations and companies can afford to collect these large datasets and train these increasingly high computer- and energy-heavy models on their premises. This is problematic in view of there being an increasing adoption of sensor-based applications in personal devices utilizing machine learning neural network models that map raw sensor data to meaningful outcomes for inferring user activities and wellbeing states.

**To** address this, developers may use pre-trained models that are semantically similar to the outcome the developer is looking to achieve. These pre-trained models may be fine-tuned to make them closer to the purpose of the model to be executed by the developer's model. Some pre-trained models are available publicly. For example, example pre-trained models that are publicly available (and may be used as pre-trained models mentioned throughout the present disclosure) may be found:

- As part of the material available discussing the tensor flow model, VGGish;
- As part of the materials available for: "Self-supervised Learning for Human Activity Recognition Using 700,000 Person-days of Wearable Data" by Hang Yuan, Shing Chan, Andrew P. Creagh, Catherine Tong, David A. Clifton, Aiden Doherty;
- As part of materials using the "Human Activity Recognition Using Smartphones Dataset", which comprises gyroscope and accelerometer data from people wearing smartphones and performing normal actions.
- As part of materials using the "THUMOS Dataset", which comprises a large video dataset for action classification
- As part of materials using "Common Voice", which comprises a public domain database of crowdsourced data across a wide range of dialects for speech recognition.

It is understood that this list is not exhaustive, and that other datasets and publicly-available models may also be used in the presently described mechanisms.

The emerging success of unsupervised and self-supervised models, which enable the use of massive unlabeled data in addition to labelled data, has accelerated the supply of publicly available pre-trained models for fine-tuning for their own tasks.

Either supervised or unsupervised, unlabelled datasets have been used to train a plethora of models. For example, models such as the Generative Pre-Training (GPT) models and their variants have been trained using unlabelled datasets, with such models being downloaded tens of millions of times in a single month. ResNet is another popular supervised model, and has been the main building block of vision applications across many fields ranging from biomedicine to agriculture.

The most common use of these models is to pass a third-party dataset through in order to output at least one numerical representation of that dataset. The output for each layer may also be labelled as a plurality of "embeddings". This numerical representation/embedding is commonly a vector of hundreds of numbers that correspond to an individual datapoint.

Embeddings are dense numerical representations of real-world objects and relationships, expressed as a vector. They may be used to represent non-numerical data (e.g., data indicating a specific category) as simple numerical data in the neural network. The vector space quantifies the semantic similarity between categories. Embedding vectors that are close to each other are considered similar. Sometimes, embeddings are used directly for "Similar items to this" section in an e-commerce store. Other times, embeddings are passed to other models. In those cases, the model can share learnings across similar items rather than treating them as two completely unique categories. For this reason, embeddings can be used to accurately represent sparse data like clickstreams, text, and e-commerce purchases as features to downstream models.

In general, an embedding may be considered to be a relatively low-dimensional space into which high-dimensional vectors can be translated. Embeddings make it easier to do machine learning on large inputs like sparse vectors representing words. Ideally, an embedding captures some of the semantics of the input by placing semantically similar inputs close together in the embedding space

Embeddings can be generated using a variety of different mechanisms and combinations thereof.

For example, an embedding may be created by an averaging process. As a specific example, when it is known that a user has clicked on an item on a webpage recently, their user embedding may not have been retrained in days. In this case, a user embedding may be created by averaging the last N items clicked by the user.

As another example, an embedding may be created by an addition and/or subtraction process. As a specific example, when word embeddings are used to encode analogies via vector differences, these may be stored and used to find later equivalents. For example, if a difference between a soda and a diet soda is stored, this difference may be used to find an equivalent diet version to a specific brand of soda.

As another example, an embedding may be created by considering a nearest neighbour. For a specific example, when word embeddings are used to encode analogies, a search engine may find a document that's most relevant to a search query by finding semantically similar words to the embeddings.

The use of embeddings have, over the past couple of years, replaced traditional hand-engineered features that practitioners used to extract outputs from datasets. After the embeddings are extracted from the pre-trained neural network, the transformed dataset (aka, the extracted set of embeddings) is fed to a linear or less-powerful model for further fine-tuning. This process is known as transfer learning.

Transfer learning is a machine learning method where a model developed for a task is reused as the starting point for a model on a second task. It is a popular approach in deep learning in which pre-trained models are used as a starting point on processing tasks that normally use vast compute and time resources for developing neural network models on these problems (for example, on natural language processing-based tasks).

The most common incarnation of transfer learning in the context of deep learning comprises the following workflow:

1. Take layers from a previously trained model.
2. Freeze the layers to avoid destroying any of the information they contain during future training rounds.
3. Add some new, trainable layers on top of the frozen layers. These trainable layers will learn to turn the old features into predictions on a new dataset.
4. Train the new layers on your dataset.

A last, optional step of transfer learning, is fine-tuning. Fine-tuning comprises unfreezing the entire model obtained above (or part of it), and re-training the model using new data with a very low learning rate. This can potentially achieve meaningful improvements as it incrementally adapts the pretrained features to the new data.

The final predictions of these pre-trained models can be abandoned because they have been trained on different (but semantically similar) tasks to what the developers models will eventually be run on. Instead, their learned intermediate representations (*embeddings*) that carry semantic and meaningful information are considered to be more meaningful and can be effectively transferred to other tasks. However, given the large number of layers and various dimensionalities, the level of information abstraction varies as the input data flows through the neural network.

For example, sensor data is represented as high-dimensional timeseries and the operations within a pre-trained network do not preserve the temporal order of the data as they further compress the input data. This abandonment of the temporal order may harm the performance when used in further downstream/fine-tuning tasks. This means that although large pre-trained models for sensor timeseries data are becoming increasingly common today, they are not used efficiently. This is illustrated in the following discussion.

A lot of high-dimensional timeseries data must be transformed to 3D tensors in order to be fed to sequential deep learning models. These tensors are represented as vectors of the form/shape: [samples, timesteps, channels]. For each tensor, a sample represents a specific value obtained at a respective time (whose value is given by an associated timestep) over a specific channel. Therefore, a vector [sample1, timestep1, channel1] represents an input comprising a sample1 obtained at timestep1 over channel1.

These tensors are often passed through sequential layers such as recurrent neural networks (RNNs) (which are a type of artificial neural network that uses sequential data or time series data. They are distinguished by their "memory" as they take information from prior inputs to influence the current input and output. While traditional deep neural networks assume that inputs and outputs are independent of each other, the output of recurrent neural networks depend on the prior elements within the sequence), Long Term Short Memory (LSTM) networks (which are a type of RNN), and/or Transformers (which process every timestep of the sample along all channels and then output a transformed signal of the same shape).

However, considering that neural networks can be seen as interlocking blocks in that every layer within the neural network between the input and the output has to match the dimensions of its adjacent layers, the output vector (prediction) defines the intermediate operations. The data has to flow from the high-dimensional input to the - usually simpler- output. Different layers, such as Pooling layers and/or Flattening layers, may be used to achieve that. These layers reduce the extra dimension down to 2 dimensions, by discarding the temporal component.

For example, a pooling layer performs the so-called global average pooling operation in which a dataset of three dimensional shape [samples, timesteps, channels] is reduced to a two dimensional shape of [samples, channels] since the timestep dimension is averaged to a number of channel times. Other operations include minimum or maximum pooling, which have similar output shapes of reduced dimensionality. On the other hand, a flattening layer will take a tensor of any shape and transform it into a one-dimensional tensor (plus the samples dimension) by retaining all values in the tensor. For example, a tensor of shape [samples, timesteps, channels] will be transformed to one of vector shape [samples, timesteps*channels].

Both the flattening and pooling approaches discard the temporal dimension by calculating "dense" 2D vectors of embeddings, ready to be used in downstream models. While these aggregated 2D embeddings are compatible with simpler linear or shallow downstream models (e.g., Support-Vector Machines (SVMs), which are supervised learning models with associated learning algorithms for analyzing data for classification and regression analysis), there is still a problem in that the aggregation operations are commonly applied towards the last layers of a large neural network. These last layers have latent features that are commonly biased and application-specific because they are closer to the prediction/output layers. This means that the aggregated embeddings are less generic and potentially less useful to transfer learning tasks, which may be somewhat different from the primary task on which the embeddings were generated.

Another problem with using pre-trained embeddings is that their dimensionality is fixed by the upstream model. There is no flexible way to choose the dimensionality of the embeddings based on the resource budget on the edge device, such as a user equipment (UE), where transfer learning will take place.

One alternative is to use the outputs of earlier layers found towards the middle of the neural network architecture for downstream tasks, as these layers capture more generic features that could be generalized to more applications. However, these layer activations (embeddings) are of higher dimensionality and shape and hence are not compatible with downstream linear models, or other shallow models such as SVM, that are often deployed on the edge devices.

Various methods have already been proposed for addressing at least one of the above-mentioned issues. Three of these ways (downstream/indirectly, downstream/directly and upstream/directly) will be discussed below.

First, the downstream/indirectly mechanism will be discussed. As mentioned above, most existing applications of transfer learning rely on dense 2D embeddings that are extracted from the last layers of large neural networks, after applying Pooling or Flattening operations. Additionally, depending on the application, the downstream data size, and the complexity of the task, dimensionality reduction is applied to the embeddings to further reduce the feature size through Principal Component Analysis (PCA) and/or Uniform Manifold Approximation and Projection (UMAP).

PCA is a dimensionality reduction technique that transforms one or more of features in a dataset into a smaller number of features called principal components while attempting to retain as much information in the original dataset as possible. PCA generates embeddings reduces the dimensionality of an entity by compressing variables into a smaller subset. This allows the model to behave more effectively but makes variables more difficult to interpret, and generally leads to a loss of information.

UMAP uses graph layout algorithms to arrange data in low-dimensional space. In the simplest sense, UMAP constructs a high dimensional graph representation of the data then optimizes a low-dimensional graph to be as structurally similar to the high dimensional graph as possible.

This approach's focus is on downstream tasks (since it does not assume retraining the pre-trained (upstream) model) and addresses the problem indirectly by not addressing any data aggregation problem.

Second, the downstream/direct approach will be considered. In Natural Language Processing (NLP), most existing models operate on the sentence or the phrase level, with word embeddings are averaged to yield sentence embeddings. Recent approaches to leverage temporal dynamics include applying Discrete Cosine Transform (DCT) on the word vectors along the length of the sentence, spectral methods such as EigenSent (which uses Dynamic Mode Decomposition), and "power" means (which generalize arithmetic mean). The above approaches have been applied to transform word embeddings to sentence embeddings.

This approach's focus is on downstream tasks without retraining to upstream model, and addresses the problem directly by addressing the aggregation problem.

Third, the upstream/direct approach will be considered. This third approach focuses on customized layers that preserve the temporal information of the data, such as the dynamic temporal pooling which applies Dynamic Time Warping (DTW) for segmentation. However, this assumes access to the upstream model which is not always feasible.

The following proposes at least one mechanism for addressing issues with at least one of the above-mentioned systems.

For example, the following aims to enable more accurate and resource-aware transfer learning of machine learning (ML) models on edge devices, such as on user equipments (UEs).

This may be achieved by using richer, generic, high-dimensional embeddings that come from earlier layers of neural network, and proposes using a resource-aware technique to compress these embeddings for fine-tuning, while minimizing the information loss due to compression.

The presently described mechanism may be considered being a downstream/direct mechanism as it uses high-dimensional embeddings by preserving their sequential information as much as possible. However, contrary to the above-described downstream/direct mechanisms, the presently described mechanism can be directly applied to time-series data. The above-described techniques cannot be directly applied to timeseries data because they operate on the stacked latent dimension of the word embeddings.

The presently described techniques may be applied to time-series data because the presently described mechanism operates on a sequential dimension across channels and accounts for the constraints of a device on which it is to be run by controlling the resulting embedding size according to a newly introduced parameter (labelled below as the "p-budget"). This is to allow for the use of "expressive" embeddings that capture high-dimensional interactions while simultaneously respecting the downstream resource-constraints on the devices in terms of dimensionality. In other words, the presently described system is configured to adapt a general model for training/fine-tuning in a specific device by taking into account the resources available at the specific device. The present disclosure therefore relates to a specific technical implementation in that it is adapted to account for technical considerations of the internal functioning of a device in order to exploit the device's capabilities.

In contrast to the present disclosure, all previous work in machine learning models for sensory tasks involves computing dense compressed embeddings in a 2D-space that can be then plugged into linear classifiers. Dense embeddings refer to embeddings that have a reduced dimensionality relative to the data input to the model.

For example, instead of relying on a single aggregation operation upstream (such as mean, max, min pooling, etc.), the presently described techniques uses at least one generalized means function downstream that capture a wide spectrum of temporal features and act as non-linear moving averages on timeseries data. In particular, power means functions are defined to resource-constrained environments (e.g., personal devices) where the embedding size can directly affect model performance. In the present context, the term "power means function" refers to functions that define a means that is calculated as a function of a power (e.g., quadratic means, root means, etc.).

This will be illustrated in the following discussion.

Assuming the provision of a high-dimensional (e.g., 3D) embedding of a pre-trained neural network, the notion of a p-budget is defined. The p-budget is a label for defining an embedding size that can be used for training downstream models.

Although more information on a p-budget is provided below, in short, a p-budget may be considered as a proxy metric representing an edge device's resource capabilities, such as a UE's resource capabilities. The p-budget may be obtained by doing offline profiling on the device and/or through the device's data sheet. The higher the metric associated with a p-budget, the more resources (e.g., memory) the device has, and the more expressive (i.e., high-dimensional) embeddings may be used for training.

Based on the value of the p-budget and the original embedding dimension (which are also referred to herein as "channels"), power means functions are used to compute embeddings that generalize the arithmetic mean of the timeseries across channels, along with the harmonic, geometric, and quadratic mean. The flexibility of power means functions allows arbitrary means beyond the above to be computed for capturing different properties of the data and concatenating them into resulting embeddings with additional statistics such as the standard deviation, skewness (and further moments), or other domain-specific features such as the empirical cumulative distribution function (eCDF).

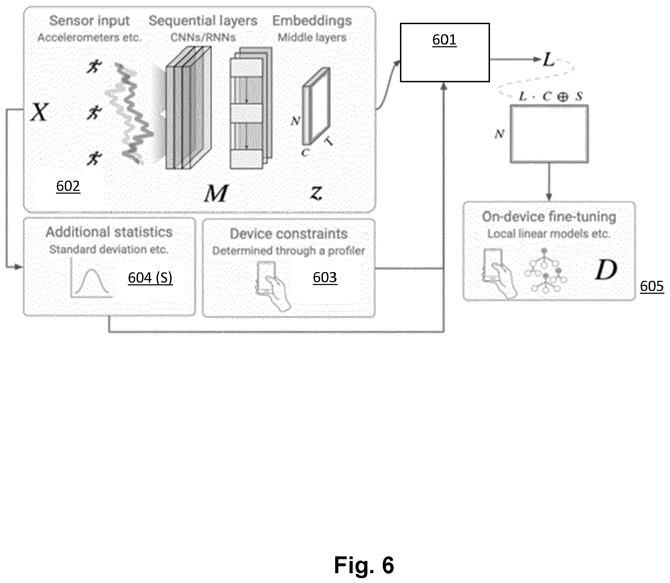

The presently described techniques will be illustrated with reference to Figures 6 to 7.

Figure 6 illustrates a potential system overview of the presently described techniques.

Figure 6 illustrates a generalized power means function 601 that receives inputs from a pre-trained neural network 602, a P-budget indicator 603 and statistical information (S) 604, and outputs L. A device 605, such as an edge device or a UE, may use the output to perform some fine-tuning of a local ML model. The pre-trained neural network 602 may provide information on a dataset, X, used therein to the statistical information 604.

In this example, data **X** from one or more sensors in a personal device or one or more functional data of the personal device 605 passes through the pre-trained neural network 602, which maps them to embeddings. These embeddings are aggregated with power means functions 601 and are combined with external constraints 603 (e.g., device constraints of the device 605 from p-budget), and other information 604 (e.g., statistical information) to form final embeddings as output L. The final embeddings L are finetuned on device 605 using an artificial neural network model D, such as, for example, a shallow/linear model and/or a light deep neural network (DNN). A shallow/linear model D may be considered to be a model that, in some examples, does not using deep neural network layers. A shallow/linear model may be any model that belongs to the family of logistic regression, random forests, SVMs, decision trees, etc. In some examples, the light DNN may be considered to be a DNN having a simpler architecture than the model D, such as "dense" layers with a small number of units, few layers (for example as 1 to 3 layers), etc. depending on computational resources of the device 605, for example, CPU and/or GPU power, memory resources and/or battery power.

In other words the presently described system comprises a pre-trained neural network-based feature extractor M located as part of the illustrated pre-trained neural network, a downstream classifier D located as part of device 605, and a dataset $\mathbf{X} = (x_1,... ,x_N)$.

The pre-trained neural network 602 is shown in Figure 6 as comprising at least one input $X = (x_1,...,x_N)$ from at least one sensor (e.g., accelerometer, etc.), sequential layers of DNN (Deep Neural Network) (for example, CNNs (Convolutional Neural Network) and/or RNNs (Recurrent Neural Network)) labelled as M, and embeddings/middle layers labelled as z. When an input $x_i$ from a sensor is fed to this architecture, a feature representation $\mathbf{z} = M(\mathbf{x}) \in R^{N \times T \times C}$ may be obtained from one of the M's middle layers, i.e. before the last layer of the pre-trained neural network 602, where N are samples, T timesteps and C channels. Traditionally, a compressed representation towards the last layers of M (not shown in Figure 6) with dimensionality $R^{N \times F}$, would be fed to the device 605 for the device 605 to perform transfer learning, where **F** are the dense features. Now "F" may be considered to be features obtained from the last layer of the pre-trained neural network 602.

The generalized power means functions 601 is configured to generalize embedding aggregation so as to summarize timeseries $T_{1i} ... T_{ni}$ embeddings. One approach to do this is to apply global average pooling to the T (time) dimension of $\mathbf{z} \in R^{N \times T \times C}$ :

$$\forall_i = 1, ..., C = \frac{T_{1i} + \cdots + T_{last\,i}}{\| T \|}$$

where $T_1$ is the first timestep, $T_{last}$ the last timestep, and $\|T\|$ the sequence length (norm) of the timesteps. This generalisation operation may be applied to each channel C, and would result in a representation $z \in R^{N \times C}$. This global average pooling operation summarizes a sequence of embeddings $T_{1i} . T_{ni}$ by component-wise arithmetic averages

As this operation summarizes the timeseries T by its arithmetic mean, and other statistics, such as the standard deviation or skewness, may also be calculated based on the same information.

This generalization extension of power means functions may then be expressed as (based on G.H. Hardy, J.E. Littlewood, and G. Polya. 1952. Inequalities. Cambridge University Press):

$$\left(\frac{T_{1i}^{p} + \cdots + T_{last\,i}^{p}}{\parallel T \parallel}\right)^{\frac{1}{p}} \quad p \in R \cup \{\pm\infty\}$$

In mathematics, generalized means functions (or power means functions) is a term used to refer to a family of functions for aggregating sets of numbers. These include as special cases the Pythagorean means (arithmetic, geometric, and harmonic means). Therefore, this generalized formulation can recover means, such as at least one of the arithmetic mean (p=1), the harmonic mean (p=-1), the geometric mean (p=0), the root mean square or quadratic mean (p=2), and/or the cubic mean (p=3). In the limits where $p \to \pm\infty$, the power mean approaches the minimum (p=-oo) and the maximum (p=+∞) of the timestep sequence **T**.

All of the power means functions calculated using this operation may be concatenated. For example, for each channel C of **z**, a power mean (e.g. p=1) along the timeseries T axis may be calculated, resulting in a new representation $\mathbf{z} \in R^{N \times C}$. However, as many power means functions are to be combined in the same embedding and L power mean values may be calculated and concatenated along the channel dimension, ending up with a new $\mathbf{z} \in R^{N \times C_1 \oplus \ldots \oplus C_L}$, where $\oplus$ is the concatenation symbol. The value L corresponds to the number of power means functions, and controls the resulting dimensionality of the embedding. L may be considered to be the variable that controls the power means functions by multiplying the channel size, L times. The resulting representation lies in $R^{N \times L^* C}$, because every additional power mean occupies the same number of dimensions.

**To** enrich the representation power of the embedding, other statistics S may be computed on the raw signals **X** from the one or more sensors as single scalars (e.g. standard deviation) or sets of values (e.g. Fourier coefficients) may be concatenated with the power means functions, yielding a final representation $\mathbf{z} \in R^{N \times L^* C \oplus S}$.

**The** content of the input data **X** provided to the model M 602 and the statistics 604 can be multi-dimensional time series data from one or more sensors in the device D 605, such as, for example, accelerometer and/or audio data. This input data can be represented in 3D tensors of dimensionality [samples, time steps, channels]. The input dataset does not need to go through the pre-trained neural network to calculate S and hence we operate on the original feature vector **X.**

It is understood that the addition of statistical values may be optional. When applied, the statistics may be any features extracting from the time series. Table 1 illustrates example statistics that may be used. However, it is understood that this table is not exhaustive.

| Label | Definition |
|---|---|
| abs_energy(x) | Returns the absolute energy of the time series which is the sum over the squared values |
| absolute_maximum(x) | Calculates the highest absolute value of the time series x. |
| absolute_sum_of_changes(x) | Returns the sum over the absolute value of consecutive changes in the series x |
| agg_autocorrelation(x, param) | Descriptive statistics on the autocorrelation of the time series. |
| agg_linear_trend(x, param) | Calculates a linear least-squares regression for values of the time series that were aggregated over chunks versus the sequence from 0 up to the number of chunks minus one. |
| approximate_entropy(x, m, r) | Implements a vectorized Approximate entropy algorithm. |
| ar_coefficient(x, param) | This feature calculator fits the unconditional maximum likelihood of an autoregressive AR(k) process. |
| augmented_dickey_fuller(x, param) | Does the time series have a unit root? |
| autocorrelation(x, lag) | Calculates the autocorrelation of the specified lag, according to a formula |
| benford_correlation(x) | Useful for anomaly detection applications |
| binned_entropy(x, max_bins) | First bins the values of x into max_bins equidistant bins |
| c3(x, lag) | Uses c3 statistics to measure non linearity in the time series |
| change_quantiles(x, ql, qh, isabs, f_agg) | First fixes a corridor given by the quantiles ql and qh of the distribution of x |

(continued)

| Label | Definition |
|---|---|
| cid_ce(x, normalize) | This function calculator is an estimate for a time series complexity (A more complex time series has more peaks, valleys etc.). |
| count_above(x, t) | Returns a percentage of values in x that are higher than t |
| count_above_mean(x) | Returns the number of values in x that are higher than the mean of x |
| count_below(x, t) | Returns the percentage of values in x that are lower than t |
| count_below_mean(x) | Returns the number of values in x that are lower than the mean of x |
| cwt_coefficients(x, param) | Calculates a Continuous wavelet transform for the Ricker wavelet, also known as the "Mexican hat wavelet" |
| energy_ratio_by_chunks(x, param) | Calculates the sum of squares of chunk i out of N chunks expressed as a ratio with the sum of squares over the whole series. |
| fft_aggregated(x, param) | Returns the spectral centroid (mean), variance, skew, and kurtosis of the absolute fourier transform spectrum. |
| fft_coefficient(x, param) | Calculates the fourier coefficients of the one-dimensional discrete Fourier Transform for real input by fast Fourier transform |
| first_location_of_maximum(x) | Returns the first location of the maximum value of x. |
| first_location_of_minimum(x) | Returns the first location of the minimal value of x. |
| fourier_entropy(x, bins) | Calculate the binned entropy of the power spectral density of the time series (using the welch method). |
| friedrich_coefficients(x, param) | Coefficients of polynomial $h(x)$ |
| has_duplicate(x) | Checks if any value in x occurs more than once |
| has_duplicate_max(x) | Checks if the maximum value of x is observed more than once |
| has_duplicate_min(x) | Checks if the minimal value of x is observed more than once |
| index_mass_quantile(x, param) | Calculates the relative index i of time series x where q% of the mass of x lies left of i. |
| kurtosis(x) | Returns the kurtosis of x (calculated with the adjusted Fisher-Pearson standardized moment coefficient G2). |
| large_standard_deviation(x, r) | Does time series have large standard deviation? |
| last_location_of_maximum(x) | Returns the relative last location of the maximum value of x. |
| last_location_of_minimum(x) | Returns the last location of the minimal value of x. |
| lempel_ziv_complexity(x, bins) | Calculate a complexity estimate based on the Lempel-Ziv compression algorithm. |
| length(x) | Returns the length of x |
| linear_trend(x, param) | Calculate a linear least-squares regression for the values of the time series versus the sequence from 0 to length of the time series minus one. |
| linear_trend_timewise(x, param) | Calculate a linear least-squares regression for the values of the time series versus the sequence from 0 to length of the time series minus one. |
| longest_strike_above_mean(x) | Returns the length of the longest consecutive subsequence in x that is bigger than the mean of x |
| longest_strike_below_mean(x) | Returns the length of the longest consecutive subsequence in x that is smaller than the mean of x |
| matrix_profile(x, param) | Calculates the 1-D Matrix Profile[1] and returns Tukey's Five Number Set plus the mean of that Matrix Profile. |
| max_langevin_fixed_point(x, r, m) | Largest fixed point of dynamics :math:argmax_x {h(x)=0}' estimated from polynomial $h(x)$, |

(continued)

| Label | Definition |
|---|---|
| maximum(x) | Calculates the highest value of the time series x. |
| mean(x) | Returns the mean of x |
| mean_abs_change(x) | Average over first differences. |
| mean_change(x) | Average over time series differences. |
| mean_n_absolute_max(x, number_of_maxima) | Calculates the arithmetic mean of the n absolute maximum values of the time series. |
| mean_second_derivative_ central(x) | Returns the mean value of a central approximation of the second derivative |
| median(x) | Returns the median of x |
| minimum(x) | Calculates the lowest value of the time series x. |
| number_crossing_m(x, m) | Calculates the number of crossings of x on m. |
| number_cwt_peaks(x, n) | Number of different peaks in x. |
| number_peaks(x, n) | Calculates the number of peaks of at least support n in the time series x. |
| partial_autocorrelation(x, param) | Calculates the value of the partial autocorrelation function at the given lag. |
| percentage_of_reoccurring_ datapoints_to_all_datapoints(x) | Returns the percentage of non-unique data points. |
| percentage_of_reoccurring_ values_to_all_values(x) | Returns the percentage of values that are present in the time series more than once. |
| permutation_entropy(x, tau, dimension) | Calculate the permutation entropy. |
| quantile(x, q) | Calculates the q quantile of x. |
| query_similarity_count(x, param) | This feature calculator accepts an input query subsequence parameter, compares the query (under z-normalized Euclidean distance) to all subsequences within the time series, and returns a count of the number of times the query was found in the time series (within some predefined maximum distance threshold). |
| range_count(x, min, max) | Count observed values within the interval [min, max). |
| ratio_beyond_r_sigma(x, r) | Ratio of values that are more than r * std(x) (so r times sigma) away from the mean of x. |
| ratio_value_number_ to_time_ series_length(x) | Returns a factor which is 1 if all values in the time series occur only once, and below one if this is not the case. |
| root_mean_square(x) | Returns the root mean square (rms) of the time series. |
| sample_entropy(x) | Calculate and return sample entropy of x. |
| set_property(key, value) | This method returns a decorator that sets the property key of the function to value |
| skewness(x) | Returns the sample skewness of x (calculated with the adjusted Fisher-Pearson standardized moment coefficient G1). |
| spkt_welch_density(x, param) | This feature calculator estimates the cross power spectral density of the time series x at different frequencies. |
| standard_deviation(x) | Returns the standard deviation of x |
| sum_of_reoccurring_data_points (x) | Returns the sum of all data points, that are present in the time series more than once. |
| sum_of_reoccurring_values(x) | Returns the sum of all values, that are present in the time series more than once. |

(continued)

| Label | Definition |
|---|---|
| sum_values(x) | Calculates the sum over the time series values |
| symmetry_looking(x, param) | Boolean variable denoting if the distribution of x looks symmetric. |
| time_reversal_asymmetry_ statistic(x, lag) | Returns the time reversal asymmetry statistic. |
| value_count(x, value) | Count occurrences of value in time series x. |
| variance(x) | Returns the variance of x |
| variance_larger_than _standard_ deviation(x) | Is variance higher than the standard deviation? |
| variation_coefficient(x) | Returns the variation coefficient (standard error / mean, give relative value of variation around mean) of x. |

As every integer and float number may be used as a potential p-power, some method is used for constraining the number of resulting dimensions outputted to a device for fine tuning.

As mentioned above, the present disclosure introduces a "p-budget". This p-budget takes into account the local finetuning requirements available at the device 605 in order to determine the length of L. For example, the p-budget may be considered as being a linear combination of the number of power means functions, the channel dimensions, and the length of the additional statistical features S, such as follows:

$$\max P_{budget} = L * C + \| S \|$$

or

$$L = round\left(\frac{\left(\max P_{budget} - \| S \|\right)}{C}\right)$$

For example, if the device 605, such as the edge device or UE, is only capable of training models with datasets up to 1000 dimensions, the p-budget may be set equal to 1000. In an example in which the channel length is C=128 and S=5, then $L = round(7.7)=8$. Therefore, 8 power means functions may be the maximum number of power means per channel that may be afforded according to this framework.

Training a model on a device 605 is limited by a number of device-specific factors, which influence the complexity of the model that can be trained on the device, the data size used for training and the dimensionality of the data used for training. Such limiting device-specific factors include the amount of memory and processing unit power available for model training at the device.

Considering a locally available dataset that can be used for fine-tuning with an ML model, such as a linear model, batched training (or learning in multiple epochs) can mitigate the issue of potentially large data size (number of rows). Batched training may refer the process of training on batches (splits) of a dataset, which requires lower memory. In extreme cases, it is possible to train on-device neural networks with a single datapoint per epoch, in which the batch_size equals 1. However, the dimensionality of the data (number of columns) has to be accounted for since it adds to the computation and energy overhead. The present disclosure addresses this by simultaneously allowing for "expressive" embeddings that capture high-dimensional interactions while respecting the downstream dimensionality constraints.

As the power means functions range from $-\infty$ to $+\infty$, it is not straightforward which power means functions values to choose. According to empirical results in Neuro Linguistic Programming (NLP), the most intuitive values for power means functions are typically small positive numbers, e.g., $|p|<10$, and odd numbers are preferable over even ones. Values such as 1, $\pm\infty$, 0.5, 2 ,3 are found to be optimal. The value of -1 is advised to be avoided because negative power means functions are discontinuous.

As an aside, it is noted that power means functions have been used for embedding aggregation in NLP, although on a different formulation. In particular, the main problem in NLP is that there are models that compute embeddings for individual words but not for sentences or paragraphs. Some NLP approaches use power means functions to compute sentence-level embeddings. However, these power means functions are used to stack the word vectors of a sentence in a matrix and compute per-dimension means, while the present disclosure relates to calculating the power means functions on the timeseries axis and concatenate on the channel axis. The presently disclosed system further introduces the p-budget, which generalizes the power means functions concept to resource-constrained environments. These constraints are not considered in NLP.

The dimensionality of the output from the generalised means may be further constrained by the device by applying a function that compresses the resulting embedding. For example, the compressing may be performed by techniques such as PCA. The additional compressing may be performed when the channel size of the output of the generalised means is bigger than the p-budget. In other words, when the channel size is high so that C > P-budget, a compressing technique such as PCA may be applied to the resulting dataset.

**As** a last step, the resulting embedding may be fed to an ML model on the device 605. As mentioned above, this ML model may be any artificial neural network model, such as a shallow/linear model, and/or a light DNN. As an example, the ML model may be a shallow model (such as a decision tree or logistic regression D(z)). In other words, the resulting embedding obtained from the above-described processes may be used as a new training set downstream. According to system constraints, the dataset may be split into training and testing sets and the performance is evaluated on the testing set.

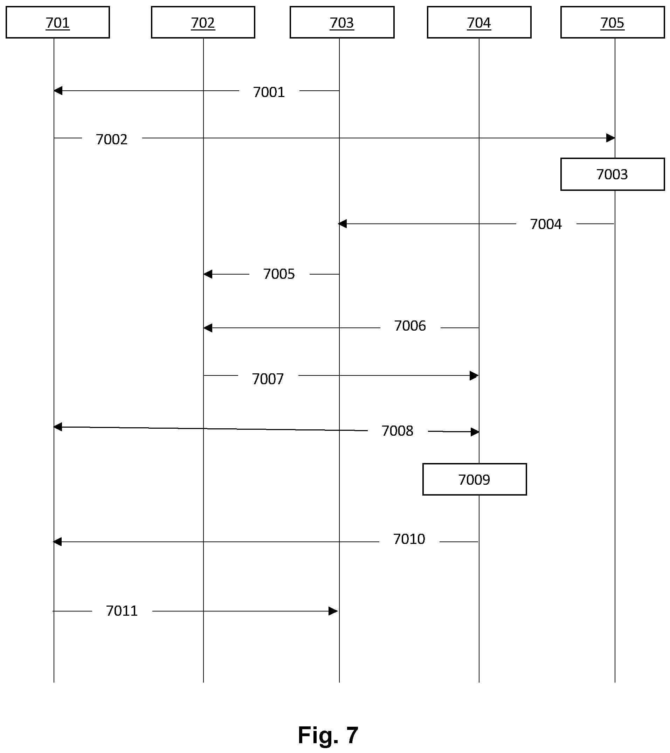

Figure 7 illustrates potential signalling that may be performed by various entities in order to implement the above-described techniques.

Figure 7 illustrates signalling that may be performed between a data storage entity 701, a resource profiler 702, an on-device model trainer 703, an embeddings transformer 704, and a cloud network server/entity 705. The data storage entity 701, resource profiler 702, on-device model trainer 703, and embeddings transformer 704 may be located on a same user device/entity 300 or 605. Further, an apparatus/system comprising the elements 701 - 704 may be, for example, the device 300 or 605. Further, the entity/system include/comprise or is communicatively connected to one or more sensor devices (not shown in the figure 7), that can be similar to the one or more sensors 309. The apparatus receives and stores sensor data from the one or more sensors in the data storage entity 701. Additionally or alternatively, the apparatus can also receive and store data relating to one or more functions/processes of the apparatus itself (e.g., a battery status, a processor status, a network communication status, etc.) in the data storage entity 701. In some additional or alternative examples, the entity 705 can be, for example, a smart phone, a mobile communication device, a personal computer, etc., and wherein the entity 300 or 605 can be a sensor device, that may have a lower p-budget that the entity 705.

During 7001, the on-device model trainer 703 signals the data storage entity 701. This signalling of 7001 may comprise a request for sensor data to be obtained. The request for sensor data may comprise a request for unlabelled sensor data (i.e., for sensor data that has not been categorised by at least one user of the device). This signalling of 7001 may further comprise a request for the requested sensor data to be provided to at least one entity in the cloud 705. The at least one entity may be a pre-trained machine learning model stored and running on a server in the cloud 705.

During 7002, the data storage entity 701 causes the data requested in 7001 to be provided to the at least one entity in the cloud 705. Although this is shown in Figure 7 as being a direct transmission, this data may be provided to the on-device model trainer 703 (or some other entity located within the device) before being transmitted to the cloud 705.

During 7003, the cloud 705 extracts embeddings from the pre-trained model. The pre-trained mode may be a larger (e.g., utilise more processing resources) than a local model resident in the on-device model trainer 703.

**The** embeddings may be extracted from an intermediate layer of the pre-trained model by running the sensor data through the pre-trained model. The layer from which the embeddings are extracted may be selected from a plurality of intermediate layers of the pre-trained models by determining how semantically close the pre-trained model is to the ultimate problem to be addressed by the developer, and selecting the intermediate layer in dependence on that determined closeness. The intermediate layer may be a last high-dimensional intermediate layer (e.g., a layer that has not aggregated over a time-series) of the large pre-trained model. The intermediate layer may be a last high-dimensional layer before the penultimate layer of the pre-trained model (i.e., the intermediate layer may be an antepenultimate layer of the pre-trained model).

**The** pre-trained model may be publicly available (such as, e.g., models based on VGGish and/or the dataset used as part of "Self-supervised Learning for Human Activity Recognition Using 700,000 Person-days of Wearable Data", and/or "Human Activity Recognition Using Smartphones Dataset", and/or the Thumos dataset, and/or the Common Voice dataset, as mentioned above). The pre-trained model may be a proprietary model. The pre-trained model may be selected from a plurality of pre-trained models using any method that a developer would usually use for selecting a pre-trained model. For example, the pre-trained model may be selected by identifying a model that is semantically close, for example, the pre-trained model has been trained by similar or partly similar data type/content (and is potentially semantically closest) to the problem to be processed out of the plurality of pre-trained models. The pre-trained model may be a neural network model, for example, an ANN (artificial neural networks), a DNN (Deep Neural Network), a CNN (Convolutional Neural Network), RNN (Recurrent Neural Network), or the like.

During 7004, the extracted embeddings are signalled from the cloud 705 to the on-device model trainer 703.

During 7005, the on-device model trainer 703 signals the resource profiler 702. The profiler may be considered to be a device component that provides information about hardware metrics, i.e. p-budget (for example, available memory, processor resources, battery resources, etc). This signalling of 7005 may be performed in response to the on-device model trainer determining that there are not enough resources available at the device for training the model using the received embeddings. When there are not enough resources available, the on-device model trainer 703 initiates embedding transformation. The on-device model trainer 703 may determine that there are not enough resources available following signalling with the resource profiler 702.

As an example, during 7005, the on-device model trainer 703 may signal the resource profiler 702 and request information about the hardware metrics (the p-budget). Based on received response to the signalling of 7005 the on-device model trainer 703 can determine whether there are enough resources available at the device for training the model using the received embeddings. When there are not enough resources available, the on-device model trainer 703 initiates embedding transformation embeddings in the transformer 704 by sending a related request. The request may also include received hardware metrics (the p-budget).

During 7006, the embeddings transformer 704 signals the resource profiler 702. This signalling of 7006 may request information on the p-budget associated with the device. In other words, this signalling of 7006 may request information on the resources available at the device for training a model on the user equipment/device. The step 7006 may be performed only when the on-device model trainer 703 didn't send the p-budget to the embeddings transformer 704 during 7005.

During 7007, the resource profiler 702 signals a response to the signalling of 7006. This response may comprise the information requested during 7006.

During 7008, the embeddings transformer 704 signals the data storage entity 701. This signalling of 7008 may comprise a request for statistics relating to the dataset to be used for training. The statistics requested may be selected in dependence on the size of the gap between the resources available/the p-budget and the resources to be used for training the model. The data storage entity 701 causes the requested statistics to be provided to the embeddings transformer. As mentioned above, it is understood that the use of such statistics is optional, and so 7008 (and any subsequent reference to the use of statistics) may not be performed.

During 7009, the embeddings transformer 704 transforms the received embeddings using power means functions (and potentially with additional statistics of 7008) using the p-budget constraint.

During 7010, the embeddings transformer 704 signals the data storage entity 701. This signalling comprises the transformed embeddings. This signalling of 7010 causes the data storage entity 701 to store the transformed embeddings and/or to update any embeddings already in the storage entity associated with that model to the transformed embeddings. Alternatively or additionally, the embeddings transformer 704 can signal/transmit the transformed embeddings directly to the on-device model trainer 703.

During 7011, the data storage entity 701 provides the transformed embeddings to the on-device model trainer 703 (when the transformed embeddings have not yet been provided to the on-device model trainer 703 by the embeddings transformer 704). The on-device model trainer 703 uses the transformed embeddings to train and/or fine tune a local ML model. Once the ML model has been trained and/or finetuned using the transformed embeddings, the ML model may be run and used for inferencing in the apparatus.

In the example of Figure 7 there are provided are a local device and a remote cloud server. The device collects the sensor data and sends it to the server where the embeddings are extracted from a pre-trained model. The server sends the embeddings to the device which requests resource information from the profiler. The requested resource information sent to the embeddings transformation module, which in turn applies the power means functions method using the p-budget constraint (and, optionally, using other statistics). The resulting embeddings are stored on the device and are subsequently used to train a local lightweight model.

The present disclosure introduces a new approach to use already-stored knowledge in large neural networks more effectively. This approach does not require access to large third-party proprietary datasets and may instead use publicly available pre-trained models to extract embeddings. Current approaches compress the data so as to fit the requirements of downstream linear models.

For example, the present disclosure shows that, starting with a large pre-trained model, embeddings from middle layers that contain richer, high-dimensional information may be extracted and aggregated in a generalized way without retraining the upstream pre-trained model. The embeddings extracted for generalized may be multi-channel timeseries embeddings. The present disclosure further introduces a metric labelled herein as a "p-budget" that can be used to determine a trade-off between the expressiveness of the extracted embeddings to be used for fine-tuning with runtime on-device constraints.

The presently described techniques enable the incorporation of various data representations that capture different temporal dynamics (provided the final embedding size meets the p-budget requirements). Further, the presently described techniques improves the performance, robustness, and generalization of locally-trained/finetuned models by providing them with more information-rich features that can be used by the device training/finetuning the model.

The presently disclosed techniques may be applied to a large number of transfer-learning-based applications in order to improve the performance of models in various modalities such as video, audio or time-series prediction. These works include efforts ranging from user gesture recognition, to adapting video analysis models across different lighting conditions and environments or audio/speech models across noise environments and heterogenous hardware. As mentioned above, most of the previous prior works assume access to high-quality labelled data that is difficult to collect. However, pre-trained models are becoming increasingly common to extract latent features in order to use in downstream transfer learning tasks. The presently described techniques leverage the already-stored information in these models in order to make the most out of high-dimensional features.

Moreover, the presently described techniques are generic enough that they can be integrated with all existing sequence neural network-based solutions (using, for example, RNNs and/or CNNs and/or Transformers) along with downstream linear classifiers (such as, for example, Logistic Regression or Random Forests).

As an example use case, consider video analysis models. These models are traditionally trained on public datasets such as MS-COCO with ~80 common classes (cat, dog, car etc.) and the video is analyzed as ordered snapshots of images. However, the present techniques allow for pre-trained video models that capture temporal dynamics of the data to be used for extracting information-rich embeddings.

Moreover, the wide variety of potential device constraints for locally training models (for example on edge devices, such as UEs) is also accounted for in the present disclosure. The presently disclosed techniques allow for direct control of these constraints through the p-budget parameter. Here, the presently disclosed system enables transfer learning/finetuning to achieve higher performance than previously used techniques since it captures richer information.

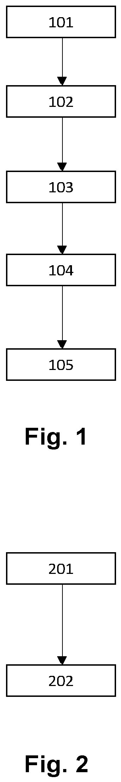

Figures 1 and 2 illustrate example aspects of the above examples. It is therefore understood that features of the above example are reflected in the below, and that features of the above may be combined with the following described mechanisms to provide further operational details.

Figure 1 illustrates operations that may be performed by an apparatus. The apparatus may be a device. The apparatus may be a device for causing a neural network model (e.g., a shallow/linear model or DNN) to be trained.

During 101, the apparatus obtains, from a pre-trained neural network node model, a first plurality of embeddings associated with an intermediate layer of the neural network node model.

During 102, the apparatus obtains a value of first number of resources available on a device for fine-tuning and/or retraining at least part of the pre-trained neural network node model.

During 103, the apparatus uses the value of the first number of resources to determine a number of averaging functions to be performed, by the device, over a time dimension for each channel of the pre-trained neural network node model.

During 104, the apparatus transforms the first plurality of embeddings into a second plurality of embeddings by performing said number of averaging functions for the each channel.

During 105, the apparatus causes the device to train a device-specific neural network model using the second plurality of embeddings. The device-specific neural network model may be, for example, a shallow model, a linear model, a light DNN, and/or any other type of artificial neural network model (e.g., a neural network node model).

The intermediate layer may be a layer of the network node model that is performed prior to an aggregation of the time series data over a time dimension. The intermediate layer may be a penultimate higher dimensional layer of the neural network node model. For example, the intermediate layer may be configured to output embeddings of the form [sample, timestep, channel] (in any order).

The averaging functions may comprise one or more power means functions.

The determined one or more power means functions may be a fractional subset of a plurality of power means functions, each of the plurality of power means functions being associated with respective priority for selection, and wherein the transforming comprises: selecting said one or more power means functions from the plurality of power means functions in order descending from highest priority to lowest priority; and generating, for each of said one or more power means functions and each of said first plurality of embeddings, said second plurality of embeddings.

The using the indication of resources to determine a number of averaging functions to be performed, by the device, over the time dimension for each channel may comprise: determining a value of second number of resources required for obtaining single scalar statistical information on the first plurality of input data; subtracting the value of the second number of resources from the value of the first number of resources to output a third value; and dividing the third value by the number of channels values to obtain a divided third value; and obtaining the number of averaging functions by subsequently performing a rounding function on the divided third value.

Said causing the device to train at least part of the device-specific neural network model using the second plurality of embeddings may comprise: concatenating said second plurality of embeddings along the channel dimension to produce a third plurality of embeddings, wherein the number of embeddings in the third plurality is less than the number of embeddings in the second plurality. Once the device-specific neural network model has been trained, the trained model may receive an input set of data for outputting an inference (e.g., an identification of audio and/or activity data).

Said obtaining the first plurality of embeddings may comprise: signalling, to a network node, a request for said first plurality of embeddings, wherein said request comprises unlabelled input data; and receiving said first plurality of embeddings from the network node.

**The** apparatus may cause the device to run the device-specific model using a second plurality of input data in order to output at least one inference; and use said inference identify at least type of data.

**The** device-specific neural network model may relate to recognizing audio data, the second plurality of input data may comprise an audio sample, and wherein the identifying at least one type of data may comprise identifying different types of audio signals within the audio sample.

**The** device-specific neural network model may relate to recognizing activity data, the second plurality of input data may comprise activity data produced when a user performs at least one type of activity, and wherein the identifying at least one type of data may comprise identifying at least one activity from said activity data.

**The** pre-trained neural network node model may be pre-trained on time-series data, wherein the time series data comprises a first plurality of input data, each of said first plurality of input data comprising a tensor having associated sets of sample values, timestep values, and channel values.

Figure 2 illustrates operations that may be performed by a network node comprising access to a pre-trained neural network node model. The network node may be as described in relation to Figure 1. The network node may be a cloud-based server.

During 201, the network node receives, from an apparatus (e.g., the apparatus of Figure 1), a request for a first plurality of embeddings associated with an intermediate layer of the neural network node model.

During 202, the network node signals said first plurality of embeddings to the apparatus.

**The** request may comprise unlabelled input data. The unlabelled input data may be input into the neural network node model, with the first plurality of embeddings being extracted from the resulting neural network node model.

**The** pre-trained neural network node model may be pre-trained on time-series data, wherein the time series data comprises a first plurality of input data, each of said first plurality of input data comprising a tensor having associated sets of sample values, timestep values, and channel values.

In both the examples of Figures 1 and 2, the intermediate layer may comprise a last high dimensional layer prior to a penultimate layer of the neural network node model.

Therefore, in general, the presently described techniques may be said to receive communication of pre-trained embeddings from the cloud at a host device. A device profiler of the host device may then calculate the p-means through the p-budget associated with the host device. This may involve calls to a CPU profiler (activity and traces), a Memory Profiler (heap and memory allocations), an Energy Profiler (energy usage), and/or any other device features/components.

Once the received pre-trained embeddings are transformed by the host device to make them host device-specific pre-trained embeddings, the host device-specific pre-trained embeddings are stored on local storage/memory. The host device-specific pre-trained embeddings may be considered to be a new feature vector that is interpretable and easy to track.

The presently described mechanisms thus introduce a new approach for using information already stored in large neural networks more effectively. The presently described mechanisms do not require access to large third-party proprietary datasets and can use publicly available pre-trained models to extract embeddings. This allows more accurate results to be output from shallower models that have been trained using the extracted embeddings than from the embeddings normally used for training such shallower models.

Current approaches are quite limited as they compress the data so as to fit the requirements of downstream linear models. For example, a popular workflow when working with audio data is to extract representations using the VGGish model and then fine-tune models using downstream data. This model splits the data into 0.96-sec nonoverlapping windows, leading to, for every 0.96s window, the model returning a 128-dimensional feature vector. Practitioners can average these windows over a larger timeframe according to their task. However, this model was trained on Audioset, a dataset that contains 600 classes (labels) which might be considered general enough to capture various everyday sounds but cannot include every possible sound of a potential audio downstream task.

For example, some classes include speech, music, instruments, car, bird and so on. In order to use such a model in a different application area, such as for example mobile health in order to detect dementia patterns from speech using a smartphone, the same 128-dim embedding has to be worked with. This embedding however, stores very high-level information and because it is the penultimate layer of the architecture, it has learned features that fit these 600 classes. According to previous work, information stored in earlier layers is more generic. The present application exploits this more generic nature of earlier layers in order to generalize to more applications.

Going back to the VGGish example, there are multiple layers before the 128-dim embedding: there is a 4096-dim dense layer and a high-dimensional [6, 4, 512] convolutional layer. The presently disclosed mechanisms make it possible to work directly with features of these layers, unlocking more accurate downstream/target applications, by offering an elegant way of trading off device constraints with embedding size.

To sum up, the state of the art right now is a workflow that operates on very compressed information that is inherently optimized for the upstream task. Recent approaches have acknowledged the rich information hidden in earlier layers but there are no other methods that work with the original dimensionality of intermediate layers. The benefits of the presently disclosed techniques are both quantitative (e.g., by enabling more accurate and data-efficient target models/applications) and qualitative (e.g., by enabling more target applications that are not restricted by the original/upstream dataset and model).

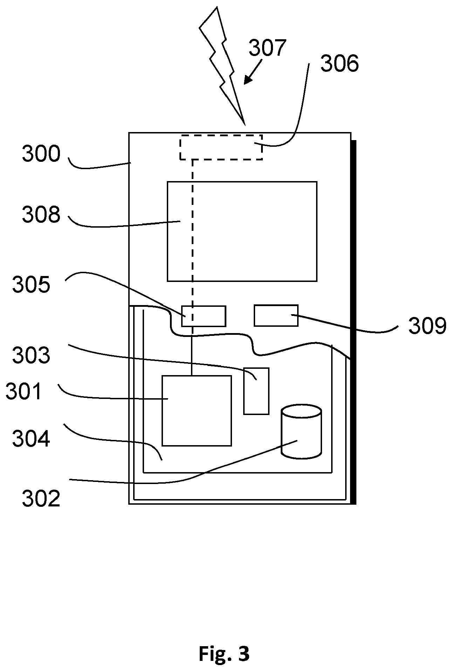

A possible wireless and/or wired communication device will now be described in more detail with reference to Figure 3 showing a schematic, partially sectioned view of a communication device 300 that is similar to the device 605. Such a communication device 300 or apparatus is often referred to as user equipment (UE) or terminal, for example, a mobile phone, a mobile communication device, a smartphone, a personal digital assistant (PDA), a handset, a smart watch, a smart ring, earphones, smart eyeglasses, an augmented reality (AR) device, a virtual reality (VR) device, an extended reality (XR) device, a laptop, a touch screen computer, a tablet, a game console, a notebook, a multimedia device, a television, a camera, a video camera or any combination thereof. Additionally or alternatively, the communication device 300 can be a server, a network router, a network access point, a smart meter, a sensor device, an alarm device, an IoT (Internet of Things) device or any combination thereof. Further, the communication device 300 can a robot, a drone or a vehicle. In some examples, the device 300 may include/comprise or may be communicatively connected to one or more sensor devices 309 and receive related sensor data, for example, one or more accelerometer, IMU (Inertial Measurement Unit), camera, video camera, microphone, LIDAR (Light Detection And Ranging) sensor, (GNSS) Global Navigation Satellite System, motion sensor, proximity sensor, radar, smoke sensor, carbon monoxide sensor, smart meter for gas/water, The communication device 300 may provide, for example, communication of data for carrying communications such as voice, electronic mail (email), text message, multimedia, sensor data and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

The communication device 300 may be for example a mobile device, that is, a device not fixed to a particular location, or it may be a stationary device. The device 300 may need human interaction for communication, or may not need human interaction for communication. As described herein, the terms UE or "user" are used to refer to any type of wireless communication device.

The communication device 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided, for example, by means of a radio part and associated antenna arrangement. The antenna arrangement may be arranged internally or externally to the wireless device.

A device 300 is typically provided with at least one data processing entity 301, at least one memory 302 and other possible components 303 for use in software and hardware aided execution of Tasks it is designed to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

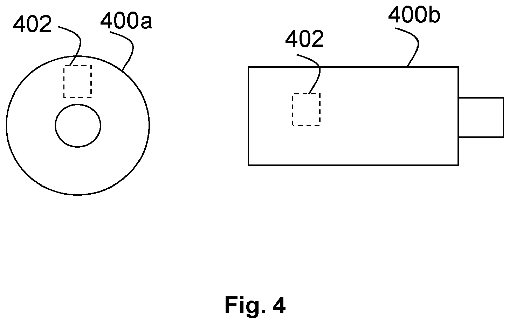

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 1 and/or Figure 2, and/or methods otherwise described previously.

**As** provided herein, various aspects are described in the detailed description of examples and in the claims. In general, some examples may be implemented in hardware or special purpose circuits, software, logic or any combination thereof. For example, some aspects may be implemented in hardware, while other aspects may be implemented in firmware or software which may be executed by a controller, microprocessor or other computing device, although examples are not limited thereto. While various examples may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

**The** examples may be implemented by computer software 402 stored in a memory and executable by at least one data processor of the involved entities or by hardware, or by a combination of software and hardware. Further in this regard it should be noted that any procedures, e.g., as in Figure 1 and/or Figure 2, and/or otherwise described previously, may represent program steps, or interconnected logic circuits, blocks and functions, or a combination of program steps and logic circuits, blocks and functions. The software 402 may be stored on such physical media as memory chips, or memory blocks implemented within the processor, magnetic media (such as hard disk or floppy disks), and optical media (such as for example DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (AStudy ItemC), gate level circuits and processors based on multicore processor architecture, as nonlimiting examples.

Additionally or alternatively, some examples may be implemented using circuitry. The circuitry may be configured to perform one or more of the functions and/or method steps previously described. That circuitry may be provided in the base station and/or in the communications device and/or in a core network entity.

As used in this application, the term "circuitry" may refer to one or more or all of the following:

(a) hardware-only circuit implementations (such as implementations in only analogue and/or digital circuitry);
(b) combinations of hardware circuits and software, such as:

(i) a combination of analogue and/or digital hardware circuit(s) with software/firmware and
(ii) any portions of hardware processor(s) with software (including digital signal processor(s)), software, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of non-limiting examples a full and informative description of some examples. However, various modifications and adaptations may become apparent to those skilled in the relevant arts in view of the foregoing description, when read in conjunction with the accompanying drawings and the claims. However, all such and similar modifications of the teachings will still fall within the scope of the claims.

In the above, different examples are described using, as an example of an access architecture to which the described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

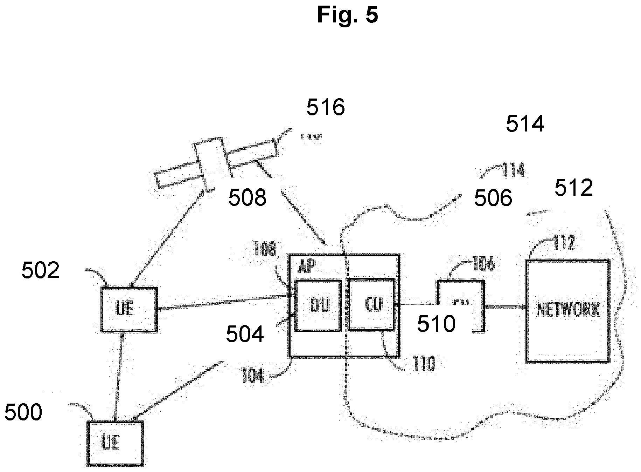

Figure 5 depicts examples of simplified system architectures only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

**The** examples are not, however, restricted to the system given as an example but a person skilled in the art may apply the solution to other communication systems provided with necessary properties.

The example of Figure 5 shows a part of an exemplifying radio access network. For example, the radio access network may support sidelink communications described below in more detail.

Figure 5 shows devices 500 and 502 that are similar to the device 300. The devices 500 and 502 are configured to be in a wireless connection on one or more communication channels with a node 504. The node 504 is further connected to a core network 506. In one example, the node 504 may be an access node such as (e/g)NodeB serving devices in a cell. In one example, the node 504 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system can comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 506 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Examples of a device are a subscriber unit, a user device, a user equipment (UE), a user terminal, a terminal device, a mobile station, a mobile device, etc

The device, for example the UE, refers to a mobile or static device (e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device, i.e. an IoT device, may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or, in some examples, a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 5) may be implemented.

The LTE network architecture is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 512, such as a public switched telephone network, or a VoIP network, or the Internet, or a private network, or utilize services provided by them. The communication network may also be able to support the usage of cloud services, for example at least part of core network operations may be carried out as a cloud service (this is depicted in Figure 5 by "cloud" 514). This may also be referred to as Edge computing when performed away from the core network. The communication system may also comprise a central control entity, or a like, providing facilities for networks of different operators to cooperate for example in spectrum sharing.

The technology of Edge computing may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 508) and non-real time functions being carried out in a centralized manner (in a centralized unit, CU 510).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where Edge computing servers can be placed between the core and the base station or nodeB (gNB). One example of Edge computing is MEC, which is defined by the European Telecommunications Standards Institute. It should be appreciated that MEC (and other Edge computing protocols) can be applied in 4G networks as well.

The depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 5 may provide any kind of these cells. A cellular radio system may be implemented as a multilayer network including several kinds of cells.

## Claims

1. A method for an apparatus, the method comprising:

   obtaining, from a pre-trained neural network node model, a first plurality of embeddings associated with an intermediate layer of the neural network node model;
   obtaining a value of a first number of resources available on a device for fine-tuning and/or retraining at least part of the pre-trained neural network node model;
   using the value of the first number of resources to determine a number of averaging functions to be performed, by the device, over a time dimension for each channel of the pre-trained neural network node model;
   transforming the first plurality of embeddings into a second plurality of embeddings by performing said number of averaging functions for the each channel; and
   causing the device to train a device specific neural network model using the second plurality of embeddings.

2. A method as claimed in claim 1, wherein the intermediate layer is a layer of the pre-trained neural network node model that is performed prior to an aggregation of the time series data over a time dimension.

3. A method as claimed in any preceding claim, wherein said averaging functions comprise one or more of power means functions.

4. A method as claimed in claim 3, wherein the one or more power means functions are a fractional subset of a plurality of power means functions, each of the plurality of power means functions being associated with respective priority for selection, and wherein the transforming comprises:

   selecting said one or more of power means functions from the plurality of power means functions in order descending from highest priority to lowest priority; and
   generating, for each of said one or more of power means functions and each of said first plurality of embeddings, said second plurality of embeddings.

5. A method as claimed in any preceding claim, wherein the using the value of the first number of resources to determine said number of averaging functions to be performed, by the device, over the time dimension for each channel comprises:

   determining a value of second number of resources required for obtaining single scalar statistical information on the first plurality of input data;

subtracting the value of the second number of resources from the value of the first number of resources to output a third value; and

dividing the third value by the number of channels values to obtain a divided third value; and

obtaining the number of averaging functions by subsequently performing a rounding function on the divided third value.

6. A method as claimed in any preceding claim, wherein said causing the device to train at least part of the device-specific neural network model using the second plurality of embeddings comprises:
concatenating said second plurality of embeddings along the channel dimension to produce a third plurality of embeddings, wherein the number of embeddings in the third plurality is less than the number of embeddings in the second plurality.

7. A method as claimed in any preceding claim, wherein said obtaining the first plurality of embeddings comprises:

signalling, to a network node, a request for said first plurality of embeddings, wherein said request comprises unlabelled input data; and

receiving said first plurality of embeddings from the network node.

8. A method as claimed in any preceding claim, comprising:

causing the device to run the trained device-specific neural network model using a second plurality of input data in order to output at least one inference; and

using said inference to identify at least a type of data.

9. A method as claimed in claim 8, wherein the device-specific neural network model relates to recognizing audio data, the second plurality of input data comprises an audio sample, and wherein the identifying at least one type of data comprises identifying different types of audio signals within the audio sample.

10. A method as claimed in claim 8 wherein the device-specific neural network model relates to recognizing activity data, the second plurality of input data comprises activity data produced when a user performs at least one type of activity, and wherein the identifying at least one type of data comprises identifying at least one activity from said activity data.

11. A method for a network node comprising access to a pre-trained neural network node model, the method comprising:

receiving, from an apparatus, a request for a first plurality of embeddings associated with an intermediate layer of the neural network node model; and

signalling said first plurality of embeddings to the apparatus.

12. A method as claimed in claim 11, wherein the request comprises unlabelled input data.

13. A method as claimed in any preceding claim, wherein the intermediate layer comprises a last high dimensional layer prior to a penultimate layer of the neural network node model.

14. A method as claimed in any preceding claim, wherein the pre-trained neural network node model is pre-trained on time-series data, the time series data comprising a first plurality of input data, each of said first plurality of input data comprising a tensor having associated sets of sample values, timestep values, and channel values.

15. An apparatus comprising means for performing the method of any of claims 1 to 10 or 13 to 14 when dependent on any of claims 1 to 10.

16. An apparatus comprising means for performing the method of any of claims 11 to 12 or 13 to 14 when dependent on any of claims 11 to 12.

17. A computer program comprising instructions which, when executed by an apparatus, cause the apparatus to perform the method of any of claims 1 to 10 or 13 to 14 when dependent on any of claims 1 to 10.

18. A computer program comprising instructions which, when executed by an apparatus, cause the apparatus to perform the method of any of claims 11 to 12 or 13 to 14 when dependent on any of claims 11 to 12.

```
┌─────────────────┐
│       101       │
└─────────────────┘
         │
         ▼
┌─────────────────┐
│       102       │
└─────────────────┘
         │
         ▼
┌─────────────────┐
│       103       │
└─────────────────┘
         │
         ▼
┌─────────────────┐
│       104       │
└─────────────────┘
         │
         ▼
┌─────────────────┐
│       105       │
└─────────────────┘
```

**Fig. 1**

```
┌─────────────────┐
│       201       │
└─────────────────┘
         │
         ▼
┌─────────────────┐
│       202       │
└─────────────────┘
```

**Fig. 2**

**Fig. 3**

402 400a

402 400b

**Fig. 4**

EP 4 350 580 A1

**Fig. 5**

**Fig. 6**

Fig. 7

Europäisches Patentamt

European Patent Office

Office européen des brevets

# EUROPEAN SEARCH REPORT

**Application Number**

EP 22 20 0122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/141995 A1 (LUNDGAARD KELD [US] ET AL) 13 May 2021 (2021-05-13) * paragraph [0025] – paragraph [0054] * * figures 1-3 * ----- | 1-18 | INV. G06N3/0464 G06N3/044 G06N3/0442 G06N3/088 |
| A | WO 2021/167998 A1 (DATAROBOT INC [US]) 26 August 2021 (2021-08-26) * page 29, line 10 – line 27 * ----- | 1 | G06N3/09 G06N3/0495 |
| A | WO 2022/072237 A1 (AMAZON TECH INC [US]) 7 April 2022 (2022-04-07) * paragraph [0114] * ----- | 1 | |

**TECHNICAL FIELDS SEARCHED (IPC)**

G06N

The present search report has been drawn up for all claims

| Place of search | Date of completion of the search | Examiner |
|---|---|---|
| The Hague | 27 February 2023 | Baldan, Marco |

EPO FORM 1503 03.82 (P04C01)

## ANNEX TO THE EUROPEAN SEARCH REPORT
## ON EUROPEAN PATENT APPLICATION NO.

EP 22 20 0122

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2023

| Patent document cited in search report | | Publication date | Patent family member(s) | | Publication date |
|---|---|---|---|---|---|
| US 2021141995 | A1 | 13-05-2021 | US 2021141995 A1 | | 13-05-2021 |
| | | | US 2023039734 A1 | | 09-02-2023 |
| WO 2021167998 | A1 | 26-08-2021 | AU 2021221978 A1 | | 15-09-2022 |
| | | | EP 4107658 A1 | | 28-12-2022 |
| | | | WO 2021167998 A1 | | 26-08-2021 |
| WO 2022072237 | A1 | 07-04-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G.H. HARDY ; J.E. LITTLEWOOD ; G. POLYA.** Inequalities. Cambridge University Press, 1952